# EUROPEAN PATENT APPLICATION

(11) **EP 4 462 833 A2**
(43) Date of publication of application: **13.11.2024**
(21) Application number: 24174995.1
(22) Date of filing: 08.05.2024
(51) Int. Cl.: H04W 8/18, H04W 48/16, H04W 48/18, H04W 88/06

(54) **SIM-BASED NETWORK ACCESS**

(30) Priority: 09.05.2023 US 202318314338
(71) Applicant: T-Mobile Innovations LLC, Overland Park, KS 66251 (US)
(72) Inventor: DREILING, Ryan Patrick, Shawnee, 66216 (US); SIRYY, Maksym, Overland Park, 66013 (US)
(74) Representative: Suddaby, Mark Edward

(57) **Abstract**

Systems and methods are provided for controlling user equipment (UE) access of a non-terrestrial network (NTN) such as a satellite network. The method includes executing an applet on a subscriber identification module (SIM) of the UE. The method receives public land mobile networks (PLMN) available to the UE at the SIM. The method determines the only PLMN available is a forbidden NTN PLMN (FPLMN) maintained by the SIM. In response to determining the only PLMN available is an NTN FPLMN, removing the PLMN from the FPLMN maintained by the SIM and refreshing the SIM and causing the UE to acquire the NTN PLMN.

## Description

### CROSS REFERENCE TO RELATED APPLICATIONS

This application claims priority to U.S. Patent Application No. 18/314,338, filed on May 9, 2023, the entire contents of which is incorporated by reference herein.

### TECHNICAL BACKGROUND

Despite powerful LTE and 5G wireless networks, well over half a million square miles of the U.S. and vast stretches of ocean are untouched by cell signals. Mobile Network Operators (MNO) have struggled to cover these areas with traditional terrestrial cellular technology, most often due to land-use restrictions (e.g., National Parks), terrain limits (e.g., mountains, deserts and other topographical realities) and land size. In those areas, people are either disconnected or pay exorbitant rates to use a satellite phone.

### BRIEF DESCRIPTION OF THE DRAWINGS

The present disclosure can be understood from the following detailed description, either alone or together with the accompanying drawings. The drawings are included to provide a further understanding of the present disclosure and are incorporated in and constitute a part of this specification. The drawings illustrate one or more examples of the present teachings and together with the description explain certain principles and operations. In the drawings:
FIG. 1 depicts a system of non-terrestrial and terrestrial networks, in accordance with disclosed examples.
FIG. 2 depicts a system of non-terrestrial and terrestrial networks, in accordance with disclosed examples.
FIG. 3 depicts exemplary user equipment (UE), in accordance with the disclosed examples.
FIG. 4 illustrates an exemplary UE in accordance with the disclosed examples.
FIG. 5 depicts a flowchart illustrating an exemplary method for controlling UE access to a public land mobile network (PLMN), in accordance with the disclosed examples.
FIG. 6 depicts a flowchart illustrating an exemplary method for controlling UE access to a PLMN, in accordance with the disclosed examples.

### OVERVIEW

Various aspects of the present disclosure relate to systems, methods and computer readable media for controlling access to a non-terrestrial network (NTN) PLMN. An applet is executed on a subscriber identification module (SIM) of a UE. The SIM, receives from the UE, PLMNs available to the UE. The SIM applet determines the only PLMN available is a forbidden PLMN (FPLMN) maintained by the SIM. In response to determining the found PLMN is a FPLMN, the PLMN is removed from the FPLMN maintained by the SIM. The SIM is refreshed causing the UE to acquire the PLMN removed from the FPLMN maintained by the SIM. In embodiments, the PLMN is an NTN, such as a satellite PLMN.

In examples the SIM is a SIM card. In examples, the UE is not currently connected to a PLMN. In examples, a PLMN on the FPLMN cannot be acquired by the UE. In examples, the PLMN is removed by clearing the FPLMN.

Various aspects of the present disclosure relate to systems, methods and computer readable media for managing PLMN acquisition. An applet is executed on a SIM of a UE. The applet receives location coordinates of the UE. The location coordinates are compared to geofencing coordinates maintained by the SIM to determine the UE qualifies to use a PLMN on the FPLMN maintained by the SIM. In response to the UE qualifying based on location coordinates, the PLMN is removed from the FPLMN maintained by the SIM. The SIM is refreshed causing the UE to acquire the PLMN removed from the FPLMN maintained by the SIM. In examples, the PLMN is an NTN, such as a satellite network.

In examples, if the applet finds a NTN PLMN is not on the FPLMN maintained by the SIM, the applet writes the NTN PLMN and a geofence coordinates for the NTN PLMN to the FPLMN. The UE is prevented from attaching to the NTN PLMN when the NTN PLMN is maintained on the FPLMN.

In other examples, it is determined the location coordinates indicate the UE is outside the geofence for the NTN PLMN maintained by the SIM. In another example, the location coordinates indicate the UE is within the geofence for the NTN PLMN maintained by the SIM.

### DETAILED DESCRIPTION

In the following description, numerous details are set forth, such as flowcharts, schematics, and system configurations. It will be readily apparent to one skilled in the art that these specific details are merely exemplary and not intended to limit the scope of this application.

In addition to the particular systems and methods described herein, the operations described herein may be implemented as computer-readable instructions or methods, and a processor on the network for executing the instructions or methods. The processor may include an electronic processor included in a UE.

From the middle of Death Valley to the Great Smoky Mountains or even that persistent neighborhood dead zone, satellite mobile service provides a crucial additional layer of connectivity in areas previously unreachable by cell signals from any provider. The combination of an MNO's terrestrial network (TN) and non-terrestrial network (NTN) allows satellite mobile service to work with a regular mobile phone and does not require extra equipment such as a separate satellite mobile phone. Using a regular mobile phone, even in many of the most remote locations previously unreachable by traditional cell signals, an NTN can provide nearly complete coverage almost anywhere a customer can see the sky.

A TN and NTN, such as a network of satellites in Earth orbit, are combined provide near complete coverage in most places in the U.S. - even in many of the most remote locations previously unreachable by traditional cell signals. The combined TN and NTN can provide user equipment (UE) with text messaging, SMS, MMS, messaging apps, voice and data coverage.

As the combination network adds NTN to enhance traditional terrestrial coverage, there is a need to control UE attachments to the NTN to preserve bandwidth and maintain superior quality of service.

In some instances, to maintain superior quality of service, MNOs may desire to keep subscriber UEs from acquiring and attaching to NTN. The NTN is broadcast across the entire United States, restricted land areas and over bodies of water. In some instances, where there is known coverage, the MNO will want the UE to attach to the TN for the best quality of service. In other areas, where there is no or limited TN coverage, the MNO will want the UE to attach to the NTN. For example, an NTN attachment is advantageous if a UE travels through a known dead zone or cannot access the TN. These areas can be designated by geofencing.

One way to prevent UEs from attaching (and attempting to attach) to a NTN, is by populating a public land mobile network (PLMN) to the forbidden public land mobile network (FPLMN) of a subscribe identity module (SIM) of a UE device. A UE will not attempt to attach to a PLMN, if a PLMN is populated in the FPLMN. If the FPLMN is populated with a NTN PLMN, which identifies the satellite-based LTE network, the UE will not be able to access the NTN in areas a MNO wants to prevent access or geofence.

A SIM-based applet is provided to populate and clear the FPLMN of the SIM of the UE. The applet is a small application that resides and runs on the SIM. In an example, the UE is in a known area with terrestrial coverage for an MNO. Subsequently, the UE leaves the area with known terrestrial coverage and the UE needs to access the NTN. The NTN PLMN may be removed by the applet from the FPLMN list such that the UE can attach the NTN PLMN.

There are a number of parameters the applet may use to determine whether to remove the NTN from the FPLMN. In one instance, applet periodically queries the UE for latitude/longitude coordinates (e.g., GPS coordinates). The applet then compares the location coordinates to a lookup table of geofencing coordinates to determine if the UE qualifies to attach to a PLMN on the FLPMN. For example, if the location coordinates of the UE reside inside/outside of the geofence area, the applet removes the NTN PLMN from the FPLMN list.

In another instance, a UE loses acquisition of a given network (such as a TN), the UE then scans other radio frequency (RF) bands for service. As it scans, the UE makes note of found PLMNs. The UE provides to the applet the list of any found PLMNs during the scan. If the applet asserts that the only found PLMN is an NTN PLMN, then the applet can dynamically remove NTN PLMN from the FPLMN. The SIM is refreshed to allow the UE to rescan and then acquire the NTN PLMN.

Historically, the FPLMN is cleared by the device after a timer expires, which hinders the ability to utilize the FPLMN to prevent access of an NTN PLMN and geofence. The applet periodically reads the contents of the FPLMN list. If the NTN is not found on the FPLMN list, the NTN that is desired to be blocked is added to the FPLMN list. This prevents the UE from attaching to the NTN PLMN and also allows the NTN PLMN to be readded to the FPLMN if the UE has clears the FPLMN list.

Turning now to the figures, various devices, systems, and methods in accordance with aspects of the present disclosure will be described.

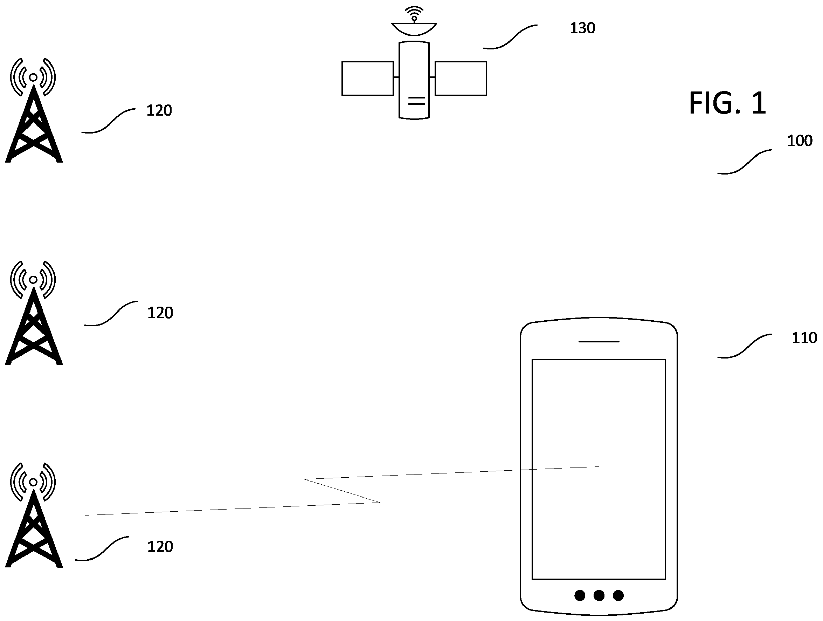

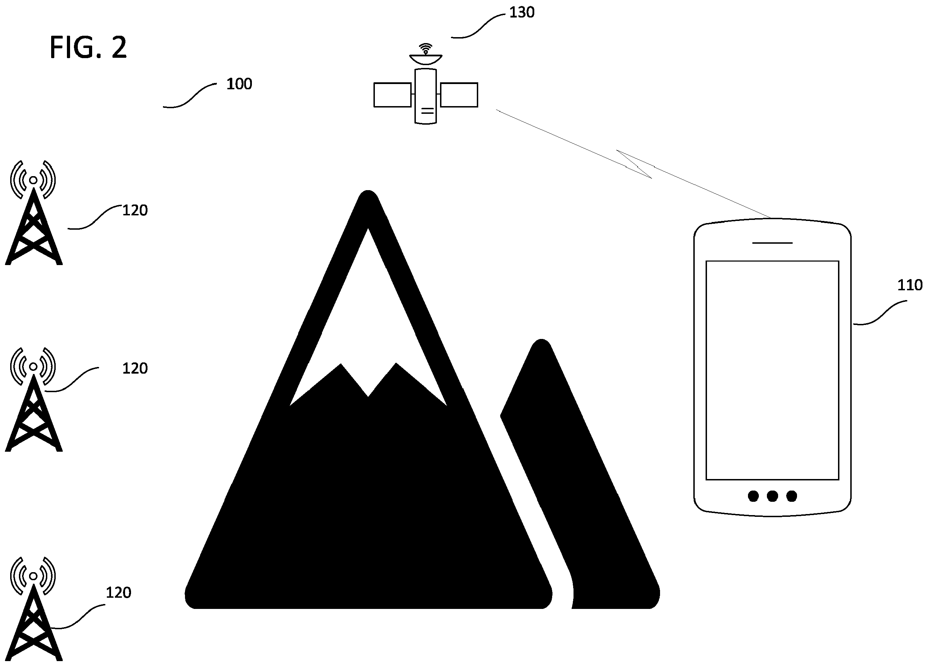

FIGS. 1 and 2 represent system 100 illustrating a combination of a TN and NTN. System 100 includes a UE 110. The UE 110 may be a cell phone, mobile phone, wireless phone, as well as other types of devices or systems that are capable of radio frequency communication. System 100 includes TN 120 and NTN 130. UE 110 is capable of attaching to TN 120 and NTN 130. System 100 may be operated by an MNO having a TN 120 and NTN 130. While depicted as a single UE 110, single TN 120 and NTN 130 for illustration, system 100 may comprise multiple UEs 110, TNs 120 and NTNs 130.

TN 120 may be a wireless network, such as a cellular network, and can include a core network and a radio access network (RAN) serving multiple UEs in a geographical area covered by a radio frequency transmission provided by the access network. As technology has evolved, different carriers within the cellular network may utilize different types of radio access technologies (RATs). RATs can include, for example, third generation (3G) RATs (e.g., WCDMA, UMTS, CDMA etc.), fourth generation (4G) RATs (e.g., WiMax, Long Term Evolution (LTE), etc.), and fifth generation (5G) RATs (new radio (NR)) and 6G. Further, different types of access nodes may be implemented within the access network for deployment for the various RATs. For example, an evolved NodeB (eNB) may be utilized for 4G RATs and a next generation NodeB (gNB) may be utilized for 5G RATs. Deployment of the evolving RATs in a network provides numerous benefits. For example, newer RATs may provide additional resources to subscribers, faster communications speeds, and other advantages.

As access nodes have evolved, networks may include a combination of multiple terrestrial access nodes such as 4G LTE eNBs and 5G NR next generation gNBs or alternatively may be 4G or 5G cellular systems. The evolution of 5G RATs has resulted in significant network architectural developments. For example, the 5G core network offers a serviced based architecture (SBA). The 5G core network is delivered through a set of interconnected network functions (NFs). The NFs are able to access the services of the other NFs in the core network. This is contrast to the 4G LTE evolved packet core (EPC), which implements a fixed-function, hard-wired architecture.

In attaching to a 4G or 5G network, each UE transmits information to the access node regarding its identity and capabilities including 4G/5G features it supports, so that the network can utilize the features and capabilities of the UE. For example, the UE may signal to the network, via a UE capability information message, multiple information types, such as, for example, which LTE bands it supports, which RATs it is capable of using, which carrier aggregation combinations it supports, modulation schemes, multiple-input multiple-output (MIMO) support, and the power class of the UE.

NTN 130 may be a wireless network, such as a cellular network, and can include a core network and a radio access network (RAN) serving multiple UEs by a radio frequency transmission provided by utilizing orbiting satellites that may be in communication with access nodes of TN 120. The satellites may include geosynchronous equatorial orbit (GEO) satellites, Medium Earth Orbit (MEO) satellites, and low Earth orbit (LEO) satellites. The NTN 130 includes NTN nodes that are not stationed on the ground.

The 3rd Generation Partnership Project (3GPP) classifies satellites as part of the Non-Terrestrial Network (NTN), which is considered as a complement to the terrestrial networks. As defined by 3GPP, an NTN may be one of three types of satellite-based NG-RAN architectures: transparent satellite-based NG-RAN, regenerative satellite-based NG-RAN, and multi-connectivity involving satellite-based NG-RAN. Transparent satellite-based NG-RAN implements frequency conversion and a radio frequency amplifier in both uplink and downlink directions. Several transparent satellites may be connected to the same gNB on the ground through New Radio Uplink Unicast (NR-Uu).

Regenerative satellite-based NG-RAN implements regeneration of the signals received from earth. The satellite payload also provides Inter-station Signaling Links (ISL) between satellites. An ISL may be a radio interface or an optical interface that may be 3GPP or non-3GPP defined. The regenerative satellite-based NGRAN architecture may be gNB processed payload (has both gNB Centralized Unit (gNB-CU) and gNB Distributed Unit (gNB-DU)) processed payload. Multi-connectivity involving satellite-based NG-RAN applies to transparent satellites as well as regenerative satellites with gNB or gNB-DU function on board.

UE 110 can attach to the TN 120 RAN or NTN 130 NG-RAN depending on available PLMNs and/or location. For example, in FIG. 1, in order to maintain superior quality of service, MNOs may desire to keep subscriber UEs from acquiring and attaching to NTN 130. UE 110 remains attached to TN 120 when a TN 120 is available and/or the UE 110 remains within a geofenced area known to have access to the TN 120. UE 110 attaches to the TN 120 for the best quality of service with the TN 120 is available.

As shown in FIG. 2, when the TN 120 is unavailable and/or the UE 110 is outside of a geofenced area known to have access to the TN 120, the UE 110 may attach to the NTN 130. Where is no or limited TN 120 coverage, the MNO will want the UE 110 to attach to the NTN 130. For example, an NTN 130 attachment is advantageous if a UE 110 travels through a known dead zone or cannot access the TN 120. These areas can be designated by geofencing.

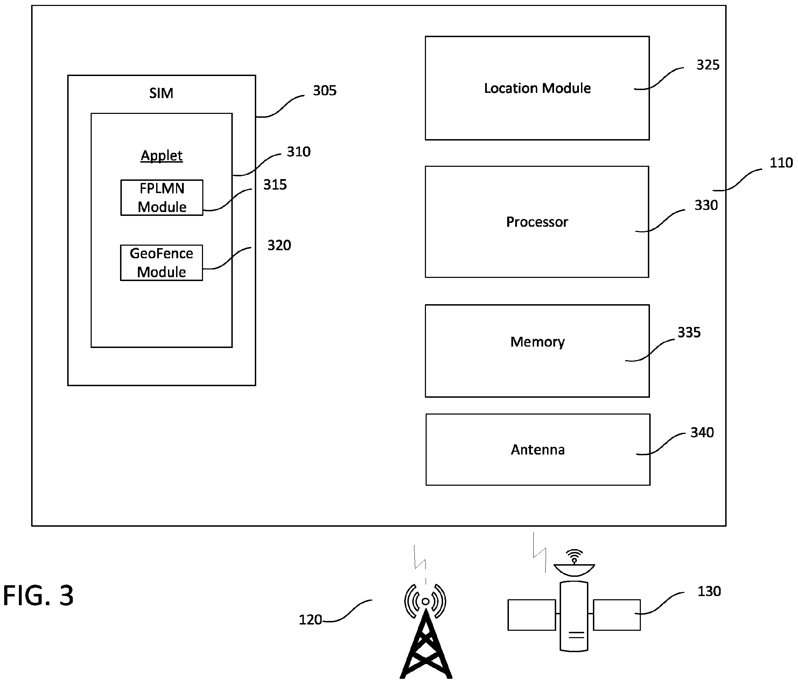

Referring next to FIG. 3, UE 110 may be a wireless communication device having a SIM 305, location module 325, processor 330, memory 335, and antenna 340.

The UE 110 may include one or more processors 330 and memory 335 coupled to the one or more processors 330. In some examples, the one or more processors 330 may be a central processing unit (CPU), a graphics processing unit (GPU), or both CPU and GPU, or other processing unit or component known in the art. Memory 335 may include volatile memory (such as random-access memory (RAM)) and/or non-volatile memory (such as read-only memory (ROM), flash memory, etc.).

UE 110 may include antenna 340. Antenna 340 may be a radio frequency (RF) antenna, coupled to processor 330. Antenna 340 transmits and receives RF signals. Antenna 340 is capable of transmitting and receiving RF signals from TN 120 and NTN 130.

Location module 325 determines the location of UE 110. Location module 325 may utilize GPS, antenna patterns, communication patterns, Bluetooth, Wifi and combinations thereof to determine the location of UE 110.

GPS utilizes satellite location and triangulation to determine the coordinates of the UE. A GPS receiver of the UE listens for satellite signals. Once the signals are acquired, the GPS receiver calculates its distance from multiple GPS satellites to determine the location of UE 110. The use of GPS herein is merely an example, and in other implementations the satellite signals may operate on another network such as Galileo, BDS, QZSS, and the like.

Location of UE 110 may also be determined based on wi-fi location, measuring power levels and antenna patterns of the UE 110 communicating wirelessly with one of the closest terrestrial base stations to determine location of UE 110.

SIM 305 may be a SIM card or module. SIM 305 is an integrated circuit (IC) intended to securely store the international mobile subscriber identity (IMSI) number and its related key and is used to identify and authenticate subscribers on UE 110.

SIM 305 comprises wireless communication service provider data and wireless communication service subscriber data. Exemplary SIM may comprise a universal integrated circuit card (UICC) or an embedded universal integrated circuit card (eUICC). SIM 305 may comprise any of a phone number, (IMSI)), a network identity (e.g., a public land mobile network (PLMN) identity), FPLMN, a country code, one or more network access keys, one or more network access credentials, and or one or more applications or applets 310. The SIM 305 may comprise one or more sets of executable instructions and/or applications or applets 310.

SIM 305 has an applet 310 for maintaining an FPLMN module 315 and geofence module 320. SIM applet 310 is a small program that runs on the SIM 305, such as the UICC or eUICC, dedicated to fulfilling a particular task. SIM applet 310 provides a way for the UE 110 to communicate directly with SIM 305. For example, UE 110 may query and transmit data to applet 310 for data regarding the FPLMN list and geofence data. For example, UE 110 may communicate the location of the UE 110 and available PLMNs to applet 310.

FPLMN module 315 has a collection of data stored on SIM 305 that lists forbidden networks. The FPLMN list (aka forbidden network list) is stored on a SIM 305 and tells UE 110 which networks it can't connect to. In one example, the FPLMN is defined in 3GPP TS 22 011. The FPLMN module 315 is dynamic and the FPLMN may be continually updated and changed based on UE 110 location and/or TN 120 and NTN 130 availability.

Geofence module 320 has a collection of data stored on SIM 305 that marks virtual geographic boundaries for UE 110. The geographic boundaries designate areas where UE 110 is allowed or is not allowed to attach to NTN 130. The geographic boundaries are virtual boundaries encompassing certain locations. Location module 325 determines the location of UE 110. Location module 325 may utilize GPS, antenna patterns, communication patterns, Bluetooth, Wifi and combinations thereof to determine the location of UE 110.

One way to control UE 110 attachment (and attempting to attach) to a TN 120 or NTN 130, is by populating a network to the forbidden public land mobile network (FPLMN) of a SIM of a UE device. A UE 110 will not attempt to attach to a PLMN if a PLMN is populated in the FPLMN of the FPLMN module 315. If the FPLMN is populated with a NTN PLMN, which identifies the satellite-based LTE network, the UE will not be able to access the NTN in areas a MNO wants to prevent access or geofence.

There are a number of parameters applet 310 may use to determine whether to remove the NTN from the FPLMN. In one instance, applet periodically queries the UE for latitude/longitude GPS coordinates. Applet 310 then determines from a lookup table if the obtained coordinates reside inside or outside a pre-defined geofence area. If the coordinates reside inside/outside of the geofence area, the applet 310 removes the NTN PLMN from the FPLMN list.

In one example, the geofence area of geofence module 320 defines locations where UE 110 may access NTN 130. For example, the geofence area may include the half a million square miles of the U.S. and vast stretches of ocean are untouched by cell signals. The geofence area may also include areas with land-use restrictions (e.g., National Parks) and terrain limits (e.g., mountains, deserts and other topographical realities). When the applet determines the coordinates from UE 110 are within the pre-defined geofence area, the NTN PLMN is removed from the FPLMN list. The SIM 305 is refreshed to allow the UE 110 to rescan and then acquire the NTN 130.

In another example, the geofence area of geofence module 320 defines location where the UE 110 cannot attach to an NTN 130 and should attach to the TN 120. For example, the geofence area may include urban areas where there is substantial TN 120 coverage. When applet 310 determines the coordinates from the UE 110 are outside of the geofence area, the NTN PLMN is removed from the FPLMN list. The SIM 305 is refreshed to allow the UE 110 to rescan and then acquire the NTN 130.

In another instance, when a UE 110 loses acquisition of a given network (such as TN 120), the UE 110 then scans other RF bands for service. As it scans, the UE 110 makes note of found PLMNs. The found PLMNs are communicated to applet 310 that compares the found PLMNs to the list of FPLMN. If the applet determines that the only found PLMN is an NTN PLMN, then the applet 310 can dynamically remove NTN PLMN from the FPLMN. The SIM 305 is refreshed to allow the UE 110 to rescan and then acquire the NTN 130.

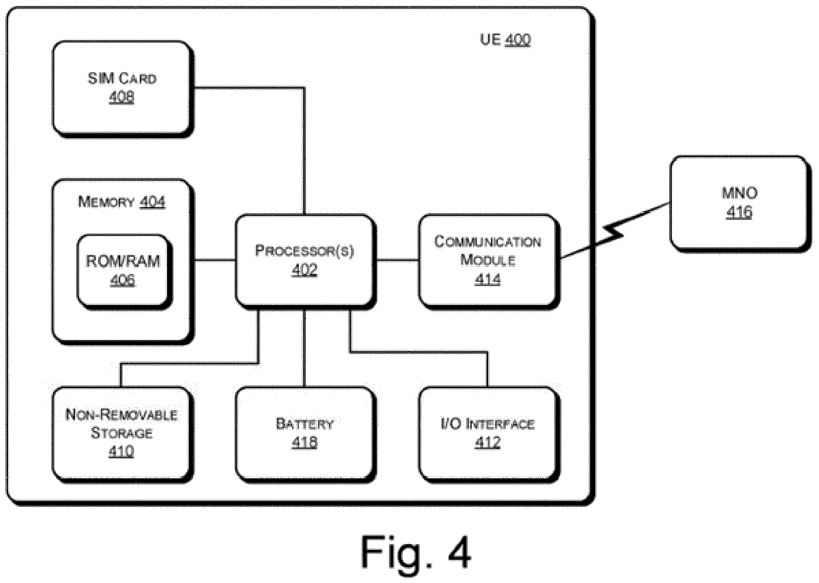

FIG. 4 illustrates an example block diagram of a UE, such as UE 110. The UE 110 may include one or more processors 402 and memory 404 coupled to the one or more processors 402. In some examples, the one or more processors 402 may be a central processing unit (CPU), a graphics processing unit (GPU), or both CPU and GPU, or other processing unit or component known in the art. Memory 404 may include volatile memory (such as random-access memory (RAM)) and/or non-volatile memory (such as read-only memory (ROM), flash memory, etc.) 406. The UE 400 may include SIM 408 coupled to the one or more processors 402, and non-removable storage 410 including, but not limited to, flash memory, magnetic storage, optical storage, and/or tape storage that may provide non-volatile storage of computer readable instructions, data structures, program modules, and other data for the UE 400.

The UE 400 may include an Input/Output (I/O) interface 412 coupled to the one or more processors 402 and may include a touch screen, microphone, and the like, configured to receive information from a user, and may include an audio output. The display is configured to provide an output for the user. The UE 400 may include a communication module 414 coupled to the one or more processors 402 and configured to wirelessly communicate with a Mobile Network Operator (MNO) 416. Communication module 414 is configured to wirelessly communicate with a terrestrial mobile network and a non-terrestrial network (e.g., satellite). The UE 400 may also include a battery 418 configured to power all components of the UE 400.

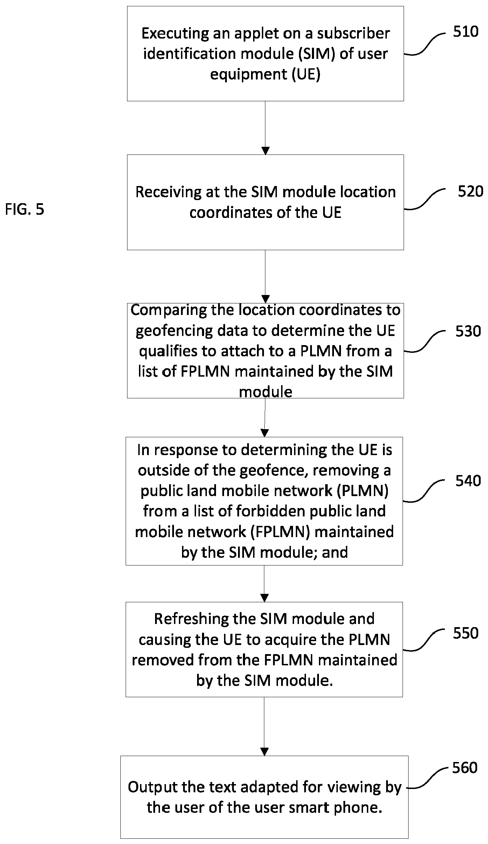

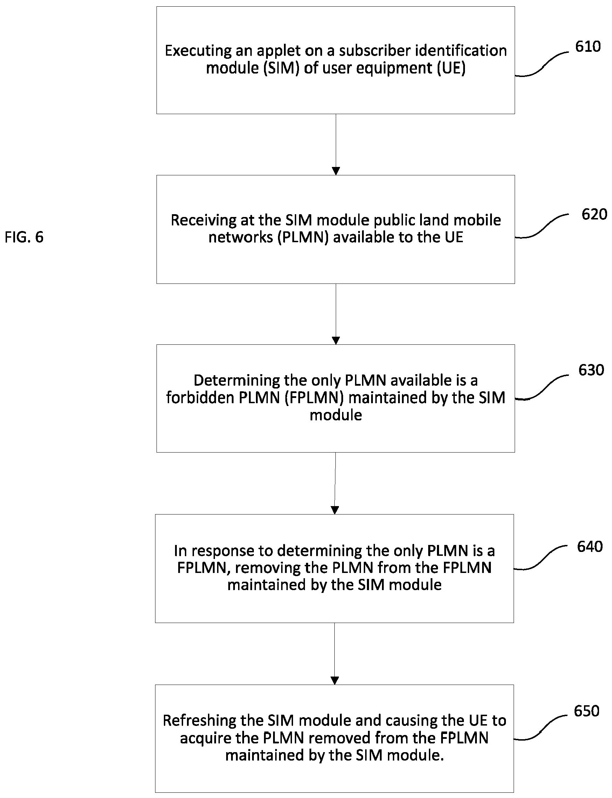

Memory 404, a non-transitory computer storage medium, may store computer-readable instructions executable by the one or more processors 402, that when executed by the one or more processors 402, cause the one or more processors 402 to perform operations described above with referenced to FIGS. 5 and 6. Some or all operations of the methods described above can be performed by execution of computer-readable instructions stored on a computer-readable storage medium.

FIG. 5 illustrates an exemplary process flow controlling access to an NTN PLMN. The operations of FIG. 5 will be described as being performed by the SIM of UE 110 for purposes of explanation. In other implementations, the operations may be performed by or under the control of a processor external SIM of UE 110. Generally, the process flow may be implemented using UE that is capable of using TN and NTN PLMN for cellular communication.

The process flow begins at operation 510, when an applet is executed on the SIM of a UE. A SIM applet is a small program that runs on the SIM, such as the UICC or eUICC, dedicated to fulfilling a particular task. SIM applet provides a way for the UE to communicate directly with SIM. For example, a UE may query and transmit data to applet for data regarding available PLMNs and location of the UE.

At operation 520, the applet receives location coordinates of the UE. In an example, the applet periodically queries the UE for latitude/longitude coordinates (e.g., GPS coordinates). The UE provides the applet with the location coordinates from its location module.

At operation 530, the location coordinates are compared to geofencing data to determine the UE qualifies to attach to a PLMN from a list of FPLMN maintained by the SIM module. The applet then compares the location coordinates to a lookup table of geofencing coordinates to determine if the UE 110 qualifies to attach to a PLMN on the FLPMN. For example, if the location coordinates of the UE reside inside/outside (depending on how the geofence area is defined) of the geofence area, the applet removes the NTN PLMN from the FPLMN list.

At operation 540, in response to determining the PLMN qualifies to be removed from the FPLMN list based on the UE location coordinates and geofence area, the PLMN is removed from the from the FPLMN maintained by the SIM module. In one example, this is accomplished by clearing the FLPMN.

At operation 550, the SIM is refreshed, clearing the FPLMN and causing the UE to acquire the PLMN removed from the FPLMN maintained by the SIM module. Thus, if an NTN PLMN was maintained on the FLPMN, it is removed from the FLPMN, the SIM is refreshed, and the NTN PLMN is acquired by the UE for mobile communication.

FIG. 6 illustrates an exemplary process flow for managing PLMN acquisition. The operations of FIG. 6 will be described as being performed by a UE 110 for purposes of explanation. In other implementations, the operations may be performed by or under the control of a processor external to UE 110. Generally, the process flow may be implemented using a UE that is configured to attach to a TN 120 and NTN 130

At operation 610, an applet is executed on a SIM of UE 110. An applet is a small program that runs on the SIM, such as the UICC or eUICC, dedicated to fulfilling a particular task. The SIM applet provides a way for the UE to communicate directly with the SIM. For example, a UE may query and transmit data to applet for data regarding available PLMNs and location of the UE.

At operation 620, public land mobile networks (PLMN) available to the UE are received at the SIM. The UE reads PLMN available by pinging the TN and NTN to see which PLMNs are available and communicates those to applet running on UE.

At operation 630, it is determined that the only PLMN available for the UE to attach is a forbidden PLMN maintained by a the FPLMN list of the SIM. For example, it is determined that no TN 120 is available for the UE to attach and that the only available PLMN is an NTN network.

At operation 640, in response to determining the found PLMN on the FPLMN, PLMN is removed from the FPLMN maintained by the SIM. In one example, this is accomplished by clearing the FLPMN.

At operation 650, Refreshing the SIM module and causing the UE to acquire the PLMN removed from the FPLMN maintained by the SIM module. In an example, if an NTN PLMN was maintained on the FLPMN, it is removed from the FLPMN, the SIM is refreshed, and the NTN PLMN is acquired by the UE for mobile communication.

The operations of FIGS. 5 and 6 need not necessarily be performed one after another in immediate sequence. While the above descriptions illustrate various aspects of the present disclosure, the present disclosure is not so limited. The methods, operations, etc. described above may be performed in an iterative matter. These additional iterations may also be reverted in a manner similar to that described above.
1. A method of managing PLMN acquisition, comprising: executing an applet on a subscriber identification module (SIM) of user equipment (UE); receiving public land mobile networks (PLMN) available to the UE at the SIM; determining the PLMN available is a forbidden PLMN (FPLMN) maintained by the SIM; in response to determining the PLMN is a FPLMN, removing the PLMN from the FPLMN maintained by the SIM; and refreshing the SIM and causing the UE to acquire the PLMN removed from the FPLMN maintained by the SIM.
2. The method of any preceding or following embodiment/feature/aspect, wherein, wherein the PLMN on the FPLMN cannot be acquired by the UE.
3. The method of any preceding or following embodiment/feature/aspect, wherein the PLMN is a non-terrestrial network (NTN).
4. The method of any preceding or following step/embodiment/feature/aspect, wherein the PLMN is a satellite PLMN.
5. The method of any preceding or following step/embodiment/feature/aspect, wherein the UE is not currently connected to a PLMN.
6. The method of any preceding or following step/embodiment/feature/aspect, wherein the SIM is a SIM card.
7. The method of any preceding or following step/embodiment/feature/aspect, wherein the PLMN is removed by clearing the FPLMN.
8. A non-transitory computer-readable medium storing instructions that when executed by a processor cause the processor to perform operations comprising: executing an applet on a subscriber identification module (SIM) of user equipment (UE); receiving public land mobile networks (PLMN) available to the UE at the SIM; determining the PLMN available is a forbidden PLMN (FPLMN) maintained by the SIM; in response to determining the available PLMN is a FPLMN, removing the PLMN from the FPLMN maintained by the SIM; and refreshing the SIM and causing the UE to acquire the PLMN removed from the FPLMN maintained by the SIM.
9. The non-transitory computer-readable medium any preceding or following step/embodiment/feature/aspect, wherein the PLMN on the FPLMN cannot be acquired by the UE.
10. The non-transitory computer-readable medium of any preceding or following step/embodiment/feature/aspect, wherein the PLMN is a non-terrestrial network.
11. The non-transitory computer-readable medium of any preceding or following step/embodiment/feature/aspect, wherein the PLMN is a satellite PLMN.
12. The non-transitory computer-readable medium of any preceding or following step/embodiment/feature/aspect, wherein the UE is not currently connected to a PLMN.
13. The non-transitory computer-readable medium of any preceding or following step/embodiment/feature/aspect, wherein the PLMN is removed by clearing the FPLMN.
14. A method of managing PLMN acquisition, comprising: executing an applet on a subscriber identification module (SIM) of user equipment (UE); receiving location coordinates of the UE at the SIM; comparing the location coordinates to geofencing coordinates maintained by the SIM to determine the UE qualifies to use a public land mobile network (PLMN) maintained on a list of forbidden public land mobile network (FPLMN) maintained by the SIM; in response to the UE qualifying based on the location coordinates, removing the PLMN from the FPLMN maintained by the SIM; and refreshing the SIM and causing the UE to acquire the PLMN removed from the FPLMN maintained by the SIM.
15. The method of any preceding or following step/embodiment/feature/aspect, wherein if the applet finds a non-terrestrial network (NTN) PLMN is not on the FPLMN maintained by the SIM, the applet writes the NTN PLMN and geofencing coordinates for the NTN PLMN to the FPLMN.
16. The method of any preceding or following step/embodiment/feature/aspect, wherein the UE is prevented from attaching to the NTN PLMN when the NTN PLMN is maintained on the FPLMN.
17. The method of any preceding or following step/embodiment/feature/aspect, further comprising: determining the location coordinates indicate the UE is outside the geofencing coordinates for the NTN PLMN maintained by the SIM.
18. The method of any preceding or following step/embodiment/feature/aspect, further comprising: determining the location coordinates indicate the UE is within the geofencing coordinates for the NTN PLMN maintained by the SIM.
19. The method of any preceding or following step/embodiment/feature/aspect, wherein the PLMN is a TN or NTN.
20. The method of any preceding or following step/embodiment/feature/aspect, wherein the PLMN is an NTN.

The exemplary systems and methods described herein may be performed under the control of a processing system executing computer-readable codes embodied on a computer-readable recording medium or communication signals transmitted through a transitory medium. The computer-readable recording medium may be any data storage device that can store data readable by a processing system, and may include both volatile and nonvolatile media, removable and non-removable media, and media readable by a database, a computer, and various other network devices.

Examples of the computer-readable recording medium include, but are not limited to, read-only memory (ROM), random-access memory (RAM), erasable electrically programmable ROM (EEPROM), flash memory or other memory technology, holographic media or other optical disc storage, magnetic storage including magnetic tape and magnetic disk, and solid-state storage devices. The computer-readable recording medium may also be distributed over network-coupled computer systems so that the computer-readable code is stored and executed in a distributed fashion. The communication signals transmitted through a transitory medium may include, for example, modulated signals transmitted through wired or wireless transmission paths.

The above description and associated figures teach the best mode of the invention and are intended to be illustrative and not restrictive. Many examples and applications other than the examples provided would be apparent to those skilled in the art upon reading the above description. The scope should be determined, not with reference to the above description, but instead with reference to the appended claims, along with the full scope of equivalents to which such claims are entitled. It is anticipated and intended that future developments will occur in the technologies discussed herein, and that the disclosed systems and methods will be incorporated into future examples. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary is made herein. In particular, the use of the singular articles such as "a," "the," "said," etc. should be read to recite one or more of the indicated elements unless a claim recites an explicit limitation to the contrary.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separately claimed subject matter.

## Claims

1. A method of managing PLMN acquisition, comprising:
executing an applet on a subscriber identification module (SIM) of user equipment (UE);
receiving public land mobile networks (PLMN) available to the UE at the SIM;
determining the PLMN available is a forbidden PLMN (FPLMN) maintained by the SIM;
in response to determining the PLMN is a FPLMN, removing the PLMN from the FPLMN maintained by the SIM; and
refreshing the SIM and causing the UE to acquire the PLMN removed from the FPLMN maintained by the SIM.

2. The method of claim 1, wherein the PLMN on the FPLMN cannot be acquired by the UE.

3. The method of claim 2, wherein the PLMN is a non-terrestrial network (NTN).

4. The method of claim 3, wherein the PLMN is a satellite PLMN.

5. The method of claim 1, wherein the UE is not currently connected to a PLMN.

6. The method of claim 1, wherein the SIM is a SIM card.

7. The method of claim 1, wherein the PLMN is removed by clearing the FPLMN.

8. A computer program product that, when executed by a processor, causes the processor to perform the method of any of claims 1 to 7.

9. A method of managing PLMN acquisition, comprising:
executing an applet on a subscriber identification module (SIM) of user equipment (UE);
receiving location coordinates of the UE at the SIM;
comparing the location coordinates to geofencing coordinates maintained by the SIM to determine the UE qualifies to use a public land mobile network (PLMN) maintained on a list of forbidden public land mobile network (FPLMN) maintained by the SIM;
in response to the UE qualifying based on the location coordinates, removing the PLMN from the FPLMN maintained by the SIM; and
refreshing the SIM and causing the UE to acquire the PLMN removed from the FPLMN maintained by the SIM.

10. The method of claim 9, wherein if the applet finds a non-terrestrial network (NTN) PLMN is not on the FPLMN maintained by the SIM, the applet writes the NTN PLMN and geofencing coordinates for the NTN PLMN to the FPLMN.

11. The method of claim 10, wherein the UE is prevented from attaching to the NTN PLMN when the NTN PLMN is maintained on the FPLMN.

12. The method of claim 10, further comprising:
determining the location coordinates indicate the UE is outside the geofencing coordinates for the NTN PLMN maintained by the SIM.

13. The method of claim 10, further comprising:
determining the location coordinates indicate the UE is within the geofencing coordinates for the NTN PLMN maintained by the SIM.

14. The method of claim 9, wherein the PLMN is a TN or NTN.

15. The method of claim 14, wherein the PLMN is an NTN.
